Europäisches Patentamt

European Patent Office

Office européen des brevets

(19)

(11) **EP 0 919 360 A2**

(12) **EUROPÄISCHE PATENTANMELDUNG**

(43) Veröffentlichungstag:
02.06.1999 Patentblatt 1999/22

(51) Int. Cl.$^6$: **B29C 65/34**, G05D 23/00

(21) Anmeldenummer: 98119962.3

(22) Anmeldetag: 22.10.1998

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **27.11.1997 DE 19751400**

(71) Anmelder:
• **Spychalski, Achim
35394 Giessen (DE)**
• **Merle, Oliver
36304 Alsfeld (DE)**

(72) Erfinder:
• **Spychalski, Achim
35394 Giessen (DE)**
• **Merle, Oliver
36304 Alsfeld (DE)**

(74) Vertreter:
**Missling, Arne, Dipl.-Ing.
Patentanwalt
Bismarckstrasse 43
35390 Giessen (DE)**

(54) **Verfahren zum selbsttätigen Verbinden von thermoplastischen Kunststoffteilen mit integrierten Heizelementen**

(57)     Ein Verfahren zum Verbinden von thermoplastischen Kunststoffteilen, insbesondere von Rohren und Fittingen, wobei ein Kunststoffteil mit einem integrierten elektrischen Heizelement verbunden ist und die Erwärmung und Verbindung der Kunststoffteile durch Anlegen einer Spannung an die Heizwendel erreicht wird, ist zur Erreichung einer dauerhaft festen Verbindung so ausgebildet, daß zumindest während des Fügevorganges die Temperatur der Heizwendel durch die Ermittlung ihres temperaturabhängigen Widerstandes bestimmt wird, daß bei Erreichen einer vorgegebenen Temperatur T-Max der Heizwendel diese abgeschaltet oder die Heizleistung reduziert wird und bei unterschreiten einer vorgegebenen Temperatur T-Min diese wieder eingeschaltet oder die Heizleistung erhöht wird und daß die Heizdauer in Abhängigkeit der Materialbeschaffenheit gewählt wird.

Fig. 3:

**Beschreibung**

Die Erfindung betrifft ein Verfahren zum selbsttätigen Verbinden von thermoplastischen Kunststoffteilen mit integrierten Heizelementen.

Die Verbindung von thermoplastischen Kunststoffteilen, insbesondere Rohrleitungen in der Gas- und Wasserver- und entsorgung, wird nach Stand der Technik häufig unter Verwendung von integrierten Heizelementen durchgeführt. Hierbei ist eines der beiden zu verbindenden Kunststoffteile in der Schweißstelle mit einem Heizleiter versehen. Dieser Heizleiter ist zumeist in Windungen, Schleifen oder Spiralen geführt um bei optimaler Aufheizung dem Thermoplast Raum für eine großflächige Vernetzung zu gewährleisten. Ein Beispiel für ein auf diesem Prinzip basierendes Verbindungselement ist der Heizwendel-Fitting.

Zum Verbinden der Kunststoffteile wird an die elektrischen Kontakte des integrierten Heizelements über eine bestimmte Zeit eine definierte Spannung $U_{Heiz}$ angelegt, die einen so hohen Schweißstrom $I_{Heiz}$ durch den Leiter treibt, daß dieser sich erwärmt und den Kunststoff in der Schweißstelle zum Schmelzen bringt. Durch geeigneten Aufbau der zu verschweißenden Kunststoffteile wird zudem ein genügend hoher Druck in der Schweißstelle erzeugt um das geschmolzene Material ineinanderfügen. Beim Abkühlen des Materials härtet die Verbindungsstelle als gasdichte Verbindung aus.

Die für das Schmelzen des Kunststoffes notwendige Wärme wird durch die im Heizelement umgesetzte Heizleistung $P_{Heiz} = U_{Heiz} * I_{Heiz}$ als Joulesche Wärme in die Verbindungsstelle eingebracht.

Bei diesem Verfahren ist zu beachten, daß der richtige Schmelzgrad und Fügedruck in der Schweißzone erreicht und gehalten werden muß. Ein zu geringer Schmelzgrad oder Fügedruck führt zu Undichtigkeit oder mangelnder Stabilität der Verbindung. Andererseits kann ein zu starkes Schmelzen die Kunststoffteile verformen und die Molekularstruktur schädigen. Um den optimalen Schmelzgrad zu erreichen müssen Schweißtemperatur und Schweißdauer mit den Materialeigenschaften des verwendeten Kunststoffes und den geometrischen Abmessungen der Kunststoffteile optimiert werden. Zudem geht auch die jeweilige Umgebungstemperatur und Spaltbreite in die Bestimmung der optimalen Schweißparameter ein.

Maßgeblich für den Schmelzgrad des Kunststoffes in der Schweißstelle ist die Temperatur die dieser inne hat. So zum Beispiel bildet das häufig verwendete Thermoplast PE80 erst ab ca. 130°C eine viskose Phase, die mit steigender Temperatur flüssiger wird. Ab ca. 300°C beginnt die chemischer Alterung und Zerstörung der Molekularstruktur des Materials.

In der Praxis wird von den bekannten Elektroschweißgeräten die Schweißzeit in Abhängigkeit von den technischen Daten, z.B. des Fittings und Rohres, sowie der Umgebungstemperatur gebildet. Die technischen Daten geben hierbei eine festgelegte Grundzeit vor. Mit Hilfe der Umgebungstemperatur und unter der Annahme, daß die Kunststoffteile eben diese Temperatur innehaben, wird dann die tatsächliche Schweißzeit gebildet. Die Annahme der Gleichheit von Umgebungs- und Materialtemperatur birgt in sich schon eine hohe Fehlerquelle. So können sich beispielsweise die Kunststoffteile vor der Verschweißung durch Sonneneinstrahlung stark erwärmen, ohne das sich die Umgebungstemperatur im gleichen Maße ändert. Dem so vorgewärmten Kunststoffteil wird während der Verschweißung die gleiche Wärmemenge zugeführt wie einem im Schatten gelagertem Kunststoffteil. Dies kann leicht zu einer Überschreitung der kritischen Temperaturen und zur chemischen Alterung führen. Außerdem wird bei diesem Verfahren einer Änderung der Umgebungstemperatur während des Schweißvorganges und damit der geänderten Wärmeabfuhr vom Kunststoffteil nicht Rechnung getragen.

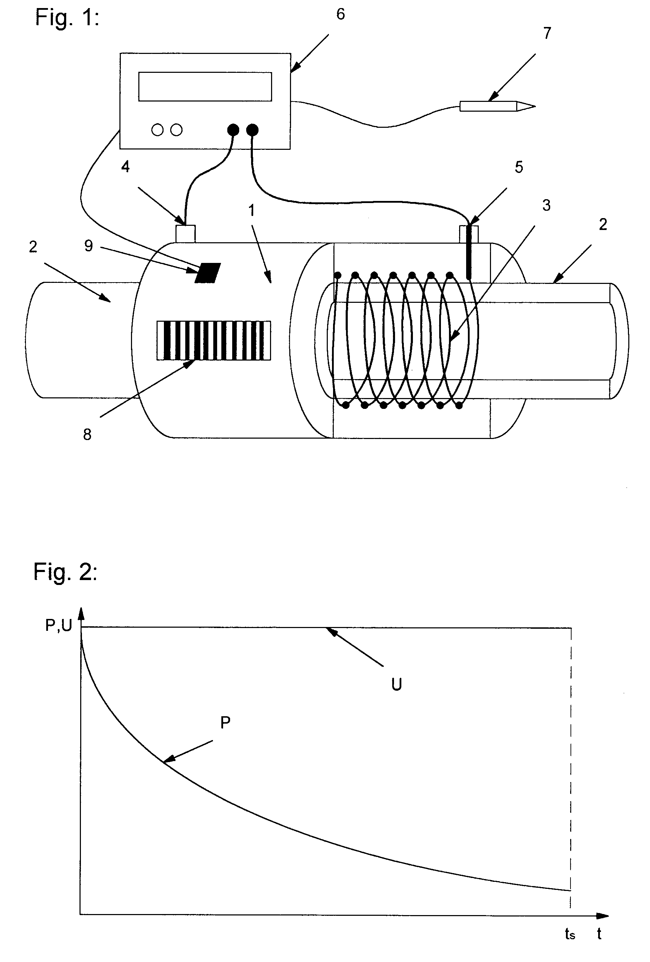

Die Schweißspannung ist durch die Kenndaten des Fittings fest vorgegeben. Zur Herstellung der Verbindung wird nun die Schweißspannung über die gesamte Schweißzeit konstant gehalten (vergl. Figur 2).

Nachteilig wirkt sich bei dieser Vorgehensweise die Unkenntnis über die maximal erreichte Temperatur und den tatsächlichen Schmelzgrad in der Verbindung aus, die letztlich die Qualität der Verbindung charakterisieren. Zusätzlich ist zu bemängeln daß die Eingabe der Daten, z.B. von Rohr und Fitting, sowie der Umgebungstemperatur manuell durchgeführt wird. Es besteht somit die Gefahr bei fehlerhafter Eingabe eine mangelhafte Schweißung durchzuführen ohne über diese Kenntnis zu erlangen.

Zum Stand der Technik gehören auch Geräte, die die Eingabe, der für dieses Verfahren notwendigen Daten, weitgehend automatisieren. Hierzu sind die jeweiligen Daten auf einem Datenträger abgelegt, der dem zu verschweißenden Kunststoffteil zugeordnet ist. Als Datenträger werden in der Regel Strichcodes oder Magnetkarten verwendet. Im Fall des Strichcodes werden die Daten mit einem Abtaster erfaßt und mit Hilfe eines Pulsformers, Decodierers und Prüfschaltkreises in einen Eingang eines Reglers eingegeben. Zusätzlich wird die Umgebungstemperatur selbständig erfaßt. Der Regler modifiziert nun aufgrund der Umgebungstemperatur automatisch die in den Daten enthaltenen Schweißparameter und regelt dementsprechend die Schweißspannung und die Dauer des Schweißvorganges (FR-A-25 72 326). Ein solches Vorgehen reduziert die Fehlerhäufigkeit durch falsche Eingaben deutlich.

Eine Verbesserung der Überwachung der Schweißparameter bezüglich der Qualitätssicherung der Schweißverbindung bietet ein Elektroschweißgerät nach Stand der Technik, welches eine für die Schweißung vorgegebene Größe, die SOLL-Schweißarbeit, benutzt. Das Gerät hält solange die vorgegebene Schweißspannung konstant, bis die IST-Schweißarbeit der SOLL-Schweißarbeit gleicht. Zusätzlich wird die Schweißzeit bestimmt und mit den Grenzen zulässiger Schweißzeit verglichen. Bei Abweichungen werden Fehler gemeldet. Dieses Verfahren sichert in einem eingeschränkten Umgebungstemperaturbereich (>5°C) die Zufuhr der für eine sichere Verbindung notwendigen Schweißarbeit (EP 0335 010 B1). Auch dieses Verfahren kann eine Überhitzung des Materials nicht ausschließen. Es macht lediglich eine optimale Verbindung wahrscheinlicher.

Um den eingeschränkten Temperaturbereich für die Verarbeitung mit den oben genannten Verfahren zu erweitern, werden verschiedentlich die Schweißverfahren so modifiziert, daß zunächst über eine bestimmte Zeit eine geringere Schweißleistung zugeführt wird, um die Kunststoffteile vorzuwärmen (WO 95/16557). Dies stellt eine unkontrollierte Erwärmung des Materials dar, da lediglich die zugeführte Leistung, bzw. Energie, nicht aber die eigentlich wichtige Größe, die Temperatur überwacht wird. Die Mutmaßung über die Richtigkeit der zugeführten Energiemenge und die Unsicherheit bei der Temperaturentwicklung während des eigentlichen Schweißvorganges, kann die Möglichkeit einer Überhitzung des Materials oder mangelnder Erwärmung nicht verhindern.

Herkömmliche Schweißgeräte erkennen über einen starken Anstieg des Stromes (bei konstanter Schweißspannung) oder starkes Absinken der Spannung (bei konstantem Schweißstrom) einen möglichen Kurzschluß, der über den Kontakt mehrerer Schleifen des integrierten Heizelementes ausgelöst wird. Dieser Wendelschluß führt dann zum Abbruch des Schweißvorganges, da im ersten Fall eine erhöhte und im zweiten Fall eine geringere Leistungszufuhr erfolgt. Dieses Verhalten führt zu einer unkontrollierten Leistungszufuhr und wird deshalb unterdrückt.

Keines der aufgezählten Elektroschweißverfahren erlaubt Rückschlüsse auf den tatsächlichen Schmelzgrad und der Temperatur in der Verbindungsstelle während des Schweißvorganges.

Kontroll- und Steuerparameter wie Schweißzeit oder SOLL-Schweißarbeit werden vom Hersteller vorgegeben und nur unter Beachtung der Umgebungstemperatur korrigiert. Dies kann in ungünstigen Situationen (z.B.: Materialtemperatur höher als Außentemperatur) die eingangs erwähnten Fehler durch nicht optimalen Schmelzgrad auslösen. Dies gilt insbesondere bei Außentemperaturen von niedriger als 5°C und höher als 40°C. Für eine sichere Verbindung sind bei den gängigen Verfahren Umgebungstemperaturen von mindestens +5°C und maximal 40°C notwendig.

Der vorliegenden Erfindung liegt die Aufgabe zugrunde, das eingangs beschriebene Verfahren zum selbsttätigen Verbinden von Kunststoffteilen mit integrierten Heizelementen dahingehend zu verbessern, daß eine sichere Verschweißung, durch Erreichen und Einhaltung der richtigen Schmelztemperatur und Durchwärmung, gewährleistet wird.

Grundlage der Erfindung ist die Tatsache, daß der elektrische Widerstand, sowie der Leitwert und der spezifische Widerstand, jeglichen leitenden Materials in folgender oder vergleichbarer Form von der Temperatur des Leiters selbst abhängt:

$$R[T] = R20*(1+\alpha20*(T-20°C))$$

R20 ist elektrischen Widerstand des Leiters bei 20°C. $\alpha20$ bezeichnet den Temperaturbeiwert oder -koeffizienten. T ist die Temperatur in °C.

Über die Gleichung für die Heizleistung

$$P = I_{Heiz}*U_{Heiz} = R*I_{Heiz}^2 = U_{Heiz}^2/R$$

läßt sich außerdem die Temperaturabhängigkeit der Heizleistung auf die des elektrischen Widerstandes zurückführen. Die folgenden Betrachtungen bezüglich der Temperaturerfassung gelten also analog.

Durch kontinuierliche Messung des elektrischen Widerstandes des integrierten Heizelements, läßt sich somit zu jedem Zeitpunkt des Schweißprozesses, sowie vor und nach der Schweißung die Temperatur des Heizelements bestimmen. Voraussetzung ist die Kenntnis des elektrischen Widerstandes des Heizelementes bei 20°C, sowie des Temperaturkoeffizienten. Die Temperatur des Leitermaterials entspricht nun genau der Temperatur des ihn unmittelbar umgebenen Kunststoffes. Dies ergibt sich aus der physikalischen Forderung das zwei Oberflächen, die sich im engen thermischen Kontakt befinden, an der Kontaktstelle die gleiche Temperatur innehaben. Die Temperatur an der Grenzschicht zwischen Draht und Kunststoff ist zudem die maximale Temperatur in der Schweißzone.

Im Gegensatz zu den eingangs erwähnten Verfahren ist es nun möglich, kontinuierliche oder kurzzeitige Überhitzung des Materials zu erkennen. Des weiteren stellt die so bestimmte Temperatur eine Regelgröße für die Heizleistung dar. Durch die kontrollierte Regelung der Heizleistung kann ein vorgegebenes Temperaturprofil durchfahren, und somit von vorne herein einer möglichen Überhitzung des Materials entgegengewirkt werden.

Ein weiterer Aspekt der Überwachung der Temperatur über den Widerstand des Heizelementes ist die Überwachung der Abkühlphase nach der Heizleistungszufuhr. Nach der Heizleistungszufuhr dürfen die Kunststoffteile solange nicht bewegt werden, bis ihre Temperatur wesentlich unter die Schmelztemperatur des Materials abgesunken ist. Ein frühzeitiges Belasten der Verbindungsstelle oder eine Verschiebung der Teile führt zu instabilen Verbindungen.

Die Erfassung der Temperatur in der Schweißzone nach obigen Verfahren bietet eine weitere, bisher unbeachtete, Kontrollmöglichkeit. Unter Zuhilfenahme

der geometrischen Abmessungen,
der Temperaturleitfähigkeit und Wärmekapazität,
der umgesetzten Heizleistung,
der Dauer der Leistungszufuhr,

sowie der Umgebungstemperatur

läßt sich die IST-Durchwärmung des Materials zu jedem Zeitpunkt des Schweißprozesses berechnen.

Unter IST-Durchwärmung ist die Eindringtiefe einer bestimmten Temperaturfront (Fläche konstanter Temperatur) in das Material zu verstehen. Dies bedeutet, daß die Temperaturverteilung in den Kunststoffteilen während des Schweißprozesses berechnet wird. Die Einführung dieser Größe ist deshalb sinnvoll, da die Herstellung einer sicheren Verbindung nicht nur von der erreichten Temperatur abhängt, sondern auch von der Verteilung der Temperatur im Material. Diese bestimmt das an der Vernetzung des Kunststoffs teilhabende Gesamtvolumen. Wird ein zu großes Volumen aufgeheizt, zerfließt die Struktur der Kunststoffteile (Verformung), ein zu geringes aufgeheiztes Volumen vermindert die Stabilität der Verbindung.

Die Verwendung der IST-Durchwärmung läßt sich in verschiedenen Verfahren umsetzen:

Zunächst ist es in einer Anlaufphase möglich, die Verbindungsstelle der Kunststoffteile durch Regelung der Heizleistung auf eine definierte Temperatur unterhalb der Schmelztemperatur des Materials vorzuwärmen, um es dann mit einem herkömmlichen Verfahren weiterzuverarbeiten.

Des weiteren läßt sich in einem eigenständigen ein- oder mehrstufigen Schweißverfahren mit Hilfe der IST-Durchwärmung, der optimale Schmelzgrad erzielen. Hierzu werden aus den vorhandenen Materialdaten und den geometrischen Abmessungen zunächst die kritische Temperatur (Überhitzungstemperatur), die maximale Heizleistung und die SOLL-Durchwärmung berechnet. Über einen rückgekoppelten Regelkreis, der die Heizleistungszufuhr steuert, wird nun die Temperatur in der Schmelzzone auf einen festen SOLL-Wert unterhalb der kritischen Temperatur eingeregelt und kontinuierlich die IST-Durchwärmung berechnet. Entspricht die IST-Durchwärmung der SOLL-Durchwärmung wird die Heizleistungszufuhr unterbrochen und gegebenenfalls ein weiterer Programmschritt eingeleitet.

Zur Berechnung der IST-Durchwärmung kann auch durch einen zusätzlich im Kunststoffteil eingearbeiteten Temperatursensor erfolgen. Hierzu ist aber die Kenntnis über die genaue Lage des Temperatursensors unabdingbar. Als Regelgröße eignet sich die so bestimmte Temperatur allerdings nicht, da die maximale Temperatur immer in der Grenzschicht zwischen Heizelement und Kunststoff eintritt und dort in der Regel kein Temperatursensor plaziert werden kann.

Das Verfahren ist insofern von vorgegebenen Schweißparametern, wie Schweißzeit oder SOLL-Schweißarbeit, unabhängig, als daß die SOLL-Durchwärmung nur von der Umgebungstemperatur, den Materialkonstanten und den geometrischen Abmessungen der Kunststoffteile abhängt. Dies bietet eine höhere Flexibilität gegenüber extremen Umgebungstemperaturen. Die aktive Temperaturregelung und - überwachung bieten ein im höchsten Maße eigenständiges Schweißverfahren.

Weiter wirkt sich bei diesem Verfahren vorteilhaft aus, daß die Bestimmung der Temperatur und IST-Durchwärmung selbst dann kontinuierlich möglich ist, wenn sich aufgrund eines Wendelschlußes der Widerstand sprunghaft absenkt. Die Temperaturmessung und die damit gekoppelte Leistungsregelung kann mit dem letzten gemessenen Temperaturwert, sowie mit einem entsprechend korrigierten Referenzwiderstand R20 fortgesetzt werden.

Im folgenden wird die Erfindung anhand der Zeichnungen näher beschrieben; in dieser zeigen:

Fig. 1     eine schematische Darstellung einer Vorrichtung für die Durchführung des erfindungsgemäßen Verfahrens

Fig. 2     eine Darstellung der eingebrachten Wärmeenergie in Abhängigkeit der Zeit beim Stand der Technik

Fig. 3     eine Darstellung des Temperaturverlaufs sowie der eingebrachten Engergie nach der Erfindung

Fig. 4     eine der Figur 3 entsprechende Darstellung, bei der die Spannung nach Erreichen der maximalen Heiztemperatur geregelt wird und

Fig. 5     eine schematische Darstellung durch den Querschnitt der zu verbindenden Teile und der zeitabhängigen Durchwärmung der Kunststoffteile

In Figur 1 ist ein Fitting (1) dargestellt, mit dessen Hilfe 2 Rohre (2) miteinander verbunden werden sollen. Der Fitting ist mit einer Heizwendel (3) ausgerüstet, und weist darüber hinaus Anschlüsse (4), (5) auf, über die die Heizwendel (3) an ein Steuergerät (6) anschließbar ist.

Das Steuergerät (6) ist mit einem Lesestift (7) zum Lesen des Barcodes (8), welcher auf dem Fitting (1) aufgebracht ist, versehen. Der Barcode enthält die technischen und geometrischen Daten des Fittings, insbesondere den Temperaturkoeffizienten $\alpha 20$ und den Referenzwiderstand R20 zur Umsetzung des erfindungsgemäßen Verfahrens. Des weiteren ist an der Oberfläche des Fittings oder in einem geringen Abstand zu dieser, ein Temperatursensor (9) angebracht, der gleichfalls mit dem Steuergerät (6) verbunden ist.

In Figur 2 ist der übliche Energieeintrag gemäß dem Stand der Technik in den Fitting und die zu verschweißenden Rohre (2) dargestellt, wobei hier an die Anschlüsse (4), (5) eine konstante Spannung (U) angelegt wird. Bei kalter Heizwendel ist der Widerstand entsprechend gering, so daß der Energieeintrag anfänglich am größten ist. Mit steigender Erwärmung der Heizwendel nimmt deren Widerstand zu, so daß die eingebrachte Leistung (P) und damit die eingebrachte Energie ständig abnimmt. Nach einer vom Hersteller des Fittings vorgegebenen Zeit (ts) wird die Heizwendel vom Spannungsquelle getrennt, wobei dann unterstellt wird, daß die Schweißung ordnungsgemäß durchgeführt ist. Aufgrund der einleitend geschilderten Umstände ist dies jedoch nicht unter allen Umständen gewährleistet, so daß fehlerhafte Verbindungen erhalten werden können.

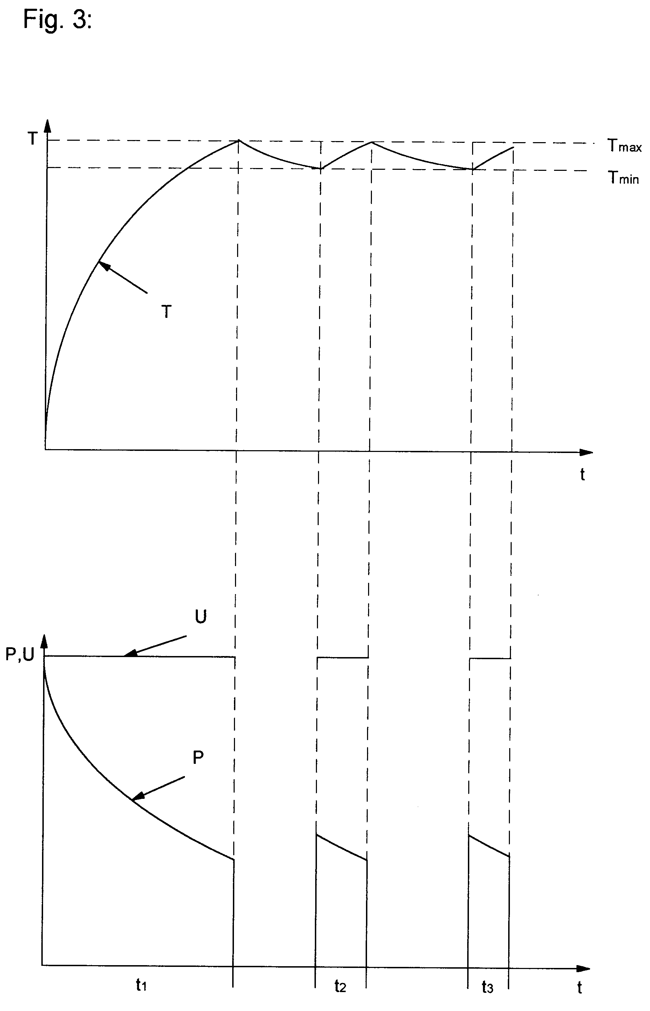

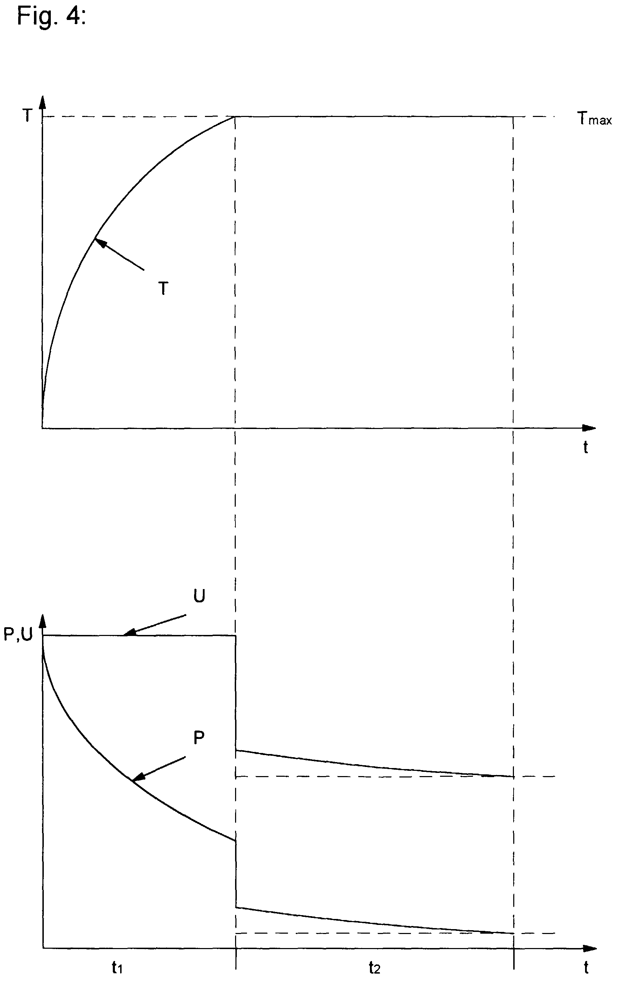

Bei dem Verfahren gemäß der Erfindung hingegen wird die Temperatur der Heizwendel über die Temperaturabhängigkeit deren Drahtwiderstandes überwacht. Diese Temperatur wird als Größe für die Regelung der Heizleistung verwendet. Gemäß dem Diagramm nach Figur 3 wird eine konstante Spannung an die Heizwendel (3) angelegt, wobei die Heizwendel (3) dann von der Spannungsquelle abgetrennt wird, wenn deren Temperatur eine vorbestimmte Größe erreicht hat. Hierbei wird eine Temperatur $T_{max}$ verwendet, bei der der Kunststoff mit Sicherheit schmilzt, jedoch nachteilige Zersetzungserscheinungen nicht auftreten. Die Aufheizzeit ist in Figur 3 mit t1 angegeben. Die Unterbrechung der Heizleistung erfolgt solange, bis die Temperatur der Heizwendel auf eine vorbestimmte Temperatur $T_{min}$ abgefallen ist. Anschließend wird die Spannungsquelle wieder eingeschaltet, bis die Temperatur $T_{max}$ wieder erreicht wird. Dieser Regelvorgang setzt sich solange fort, bis eine ausreichende Durchwärmung von Fitting (1) und Rohren (2) erhalten ist, die eine gute Verschweißung dieser Teile miteinander gewährleistet. Die für eine ausreichende Durchwärmung benötigte Zeit bzw. eingebrachte Energie kann anhand der Materialdaten und der Geometrie von Fitting und Rohren berechnet werden. Diese Durchwärmung darf nicht soweit gehen, daß die Festigkeit der gesamten Muffenverbindung beeinträchtigt wird. Normalerweise ist ein Temperatursensor entbehrlich. Für manche Anwendungsfälle kann es jedoch vorteilhaft sein, auf der Außenseite oder im Bereich der Umgebungsfläche des Fittings (1) einen Temperatursensor anzubringen, der die rechnerisch ermittelte Durchwärmung kontrolliert und somit unterschiedlichen Klimabedingungen Rechnung trägt. Beispielsweise kann der Fitting und die Rohre in der Sonne gelegen haben, so daß diese sich weitestgehend erwärmt haben, wobei die Temperatur des Fittings im Bereich der Heizwendel niedriger sein kann als an dessen Außenfläche. Die Ausgangstemperatur des Fittings im Bereich der Heizwendel kann zwar durch die Widerstandsmessung der Heizwendel bestimmt werden, nicht jedoch die von außen kommende Durchwärmung des Fittings. Für einen derartigen Fall ist ein Temperatursensor vorteilhaft, der die Durchwärmung des Fittings (1) zusätzlich kontrolliert. Bei dem Diagramm nach Figur 4 ist die gleiche Darstellung gewählt, wie bei dem Diagramm nach Figur 3. Auch hier wird anfänglich die Heizwendel (3) des Fittings (1) mit einer konstanten Spannung beaufschlagt und zwar solange, bis die Temperatur der Heizwendel die Temperatur $T_{max}$ erreicht hat. Im

Anschluß daran wird im Gegensatz zu dem Verfahren nach Figur 3 die Spannung nicht gänzlich abgeschaltet, sondern nur entsprechend verringert und zwar derart, daß die Temperatur $T_{max}$ weder überschritten noch unterschritten wird. Durch diese Maßnahme erhält man eine Heizwendeltemperatur und damit eine Temperatur des die Heizwendel umgebenden Kunststoffes, die im wesentlichen konstant ist, so daß hierdurch der Energieeintrag pro Zeiteinheit vergrößert und somit die benötigte Schweißzeit insgesamt verringert wird.

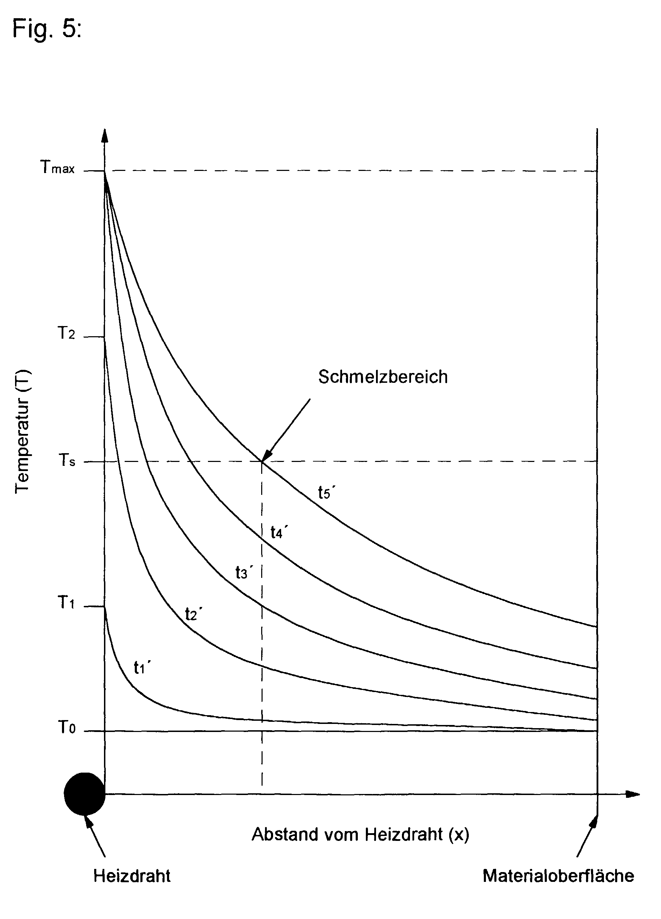

In der Figur 5 ist schließlich der Heizdraht und die Temperatur im Material mit Abstand zum Heizdraht dargestellt. In der Aufheizphase, die die Zeit t1 dauert, hat der Heizdraht eine Temperatur T1, die unterhalb seiner maximalen Arbeitstemperatur liegt, wobei eine Temperaturverteilung entsprechend der Kurve t1' erhalten wird. Mit fortschreitender Zeit erhöht sich die Temperatur des Heizdrahtes und auch die Temperatur im Innern des Fittings und der zu verbindenden Rohre entsprechend der Kurve t2'. Die Kurve t3' schließlich beschreibt den Zustand, in dem der Heizdraht seine maximale Temperatur $T_{max}$ erreicht hat und auf dieser Temperatur geregelt wird. Man erhält hier in zeitlicher Abfolge eine Durchwärmung entsprechend den Kurven t4' und t5', wobei t5' die Kurve angibt, bei der Fitting und Rohre eine ausreichende aufgeschmolzene Zone aufweisen. Zur Verdeutlichung ist horizontal gestrichelt die Schmelztemperatur Ts eingezeichnet, wobei der Schnittpunkt der Kurven t1' bis t5' hiermit die Größe des Schmelzbereiches wiedergeben, der sich um den Heizdraht ausgebildet hat. Der aufgeschmolzene Bereich sollte groß genug sein, um eine sichere Verbindung zu erhalten, jedoch nicht so groß, daß die Rohrverbindung insgesamt instabil wird.

Andererseits muß sichergestellt sein, daß die miteinander verschweißten Rohre und der Fitting ausreichend abgekühlt sind, d. h. daß die Schmelzzone wieder erstarrt ist, bevor diese Verbindung mechanisch belastet wird. Beim Stand der Technik wurde hier eine bestimmte Zeit abgewartet, wobei dann angenommen wurde, daß eine ausreichende Festigkeit gegeben war. Mit dem Verfahren gemäß der Erfindung kann jedoch gleichermaßen der Abkühlvorgang im Bereich des Heizdrahtes, d. h. an der Stelle beobachtet werden, die am letzten erstarrt. Man braucht hier lediglich den Widerstand des Heizdrahtes und damit dessen Temperatur zu überwachen. Wenn diese Temperatur einen bestimmten Wert unterschritten hat ist sichergestellt, daß die Verbindung ausreichend fest ist.

**Patentansprüche**

1. Verfahren zum Verbinden von thermoplastischen Kunststoffteilen, insbesondere von Rohren und Fittingen, wobei ein Kunststoffteil mit einem integrierten elektrischen Heizelement versehen ist und die Erwärmung und Verbindung der Kunststoffteile durch Anlegen einer Spannung an die Heizwendel erreicht wird,
dadurch gekennzeichnet, daß
zumindest während des Fügevorganges die Temperatur der Heizwendel durch die Ermittlung ihres temperaturabhängigen Widerstandes bestimmt wird, daß bei Erreichen einer vorgegebenen Temperatur T-Max der Heizwendel diese abgeschaltet oder die Heizleistung reduziert wird und bei unterschreiten einer vorgegebenen Temperatur T-Min diese wieder eingeschaltet oder die Heizleistung erhöht wird und daß die Heizdauer in Abhängigkeit der Materialbeschaffenheit gewählt wird.

2. Verfahren nach Anspruch 1, dadurch gekennzeichnet, daß die aus den Abmessungen und spezifischen Material-Daten der thermoplastischen Kunststoffteile errechneten Heizdauer ab erstmaligem Erreichen einer vorbestimmten Temperatur eingehalten wird.

3. Verfahren nach Anspruch 1 oder 2, dadurch gekennzeichnet, daß die Abkühlphase durch Erfassung des Widerstandes der Heizwendel und damit deren Temperatur überwacht wird.

4. Verfahren nach einem der Ansprüche 1 bis 3, dadurch gekennzeichnet, daß die Temperatur und insbesondere der Durchwärmungsbereich der Kunststoffteile über einen Temperatursensor erfaßt wird.

Fig. 1:

Fig. 2:

Fig. 3:

Fig. 4:

Fig. 5:

Schmelzbereich

$T_{max}$

$T_2$

$T_s$

$T_1$

$T_0$

Temperatur (T)

$t_5'$
$t_4'$
$t_3'$
$t_2'$
$t_1'$

Abstand vom Heizdraht (x)

Heizdraht

Materialoberfläche